# EUROPEAN PATENT APPLICATION

(11) **EP 4 443 111 A1**
(43) Date of publication of application: **09.10.2024**
(21) Application number: 24155833.7
(22) Date of filing: 05.02.2024
(51) Int. Cl.: G01C 21/36

(54) **VIRTUAL LANE CONSTRUCTION METHOD AND APPARATUS, DEVICE, AND COMPUTER-READABLE STORAGE MEDIUM**

(30) Priority: 15.03.2023 CN 202310253389
(71) Applicant: Guangzhou Xiaopeng Autopilot Technology Co., Ltd., Guangzhou, Guangdong 510000 (CN)
(72) Inventor: LI, Hao, Guangzhou (CN); LI, Liyun, Guangzhou (CN); LIU, Yi, Guangzhou (CN); ZENG, Jiani, Guangzhou (CN); WANG, Haoran, Guangzhou (CN); YU, Chengyu, Guangzhou (CN)
(74) Representative: Ran, Handong

(57) **Abstract**

A virtual lane construction method, a virtual lane construction apparatus, a device, and a computer-readable storage medium are disclosed. Specifically, it is possible to acquire information of lane lines around a road junction area, calculate lane centerlines of respective lanes, identify an inbound lane and an outbound lane based on route directions of the lane centerlines, connect a lane centerline of the inbound lane with a lane centerline of the outbound lane to obtain a virtual connection line, and construct a corresponding virtual lane in the road junction area for the inbound lane and the outbound lane based on the virtual connection line. Virtual connection lanes connecting the inbound lanes and the outbound lanes are thus accurately constructed in the junction area without relying on a high-precision map, ensuring the safety of autonomous driving of a vehicle and improving user's driving experience.

## Description

### Field of Invention

The present disclosure relates to the field of computer technology, and in particular to a virtual lane construction method, a virtual lane construction apparatus, a device, and a computer-readable storage medium.

### Background

With the continuous development of autonomous driving technology, the construction of virtual lanes is playing a pivotal role in the field of autonomous driving, and how to effectively identify lanes has become one of the core technical problems that need to be solved in autonomous driving technology. In related technologies, lanes on a road on which a vehicle is traveling may be acquired by using an electronic map provided by vehicle navigation software.

However, although in the related technologies information of lanes of a road may be acquired using an electronic map, in some road junction scenarios, the electronic map may not be able to provide information of lanes around a road junction area as the lanes are complex and there are usually no lanes within the road junction area. This is not conducive to the use of autonomous driving technology, affecting safety of autonomous driving of vehicles and degrading users' driving experience.

### Summary of Invention

Embodiments of the present disclosure provide a virtual lane construction method, a virtual lane construction apparatus, a device, and a computer-readable storage medium, by which virtual lanes can be accurately constructed in a junction area. Safety of autonomous driving of a vehicle is thus ensured and a user's driving experience is improved.

The embodiments of the present disclosure provide a virtual lane construction method, including: acquiring information of lane lines within a preset distance of a road j unction area and calculating lane centerlines of respective lanes based on the information of lane lines; identifying an inbound lane and an outbound lane of the road junction area based on route directions of respective ones of the lane centerlines in relation to the road junction area; connecting a lane centerline of the inbound lane with a lane centerline of the outbound lane to obtain a virtual connection line; and constructing a corresponding virtual lane in the road junction area for the inbound lane and the outbound lane based on the virtual connection line.

The embodiments of the present disclosure further provide a virtual lane construction apparatus, including: an acquisition unit configured to acquire information of lane lines within a preset distance of a road junction area and calculate lane centerlines of respective lanes based on the information of lane lines; an identification unit configured to identify an inbound lane and an outbound lane of the road junction area based on route directions of respective ones of the lane centerlines in relation to the road junction area; a connection unit configured to connect a lane centerline of the inbound lane with a lane centerline of the outbound lane to obtain a virtual connection line; and a construction unit configured to construct a corresponding virtual lane in the road junction area for the inbound lane and the outbound lane, based on the virtual connection line.

In some embodiments, the acquisition unit is further configured to: determine a first lane line and a second lane line that form each lane based on the information of lane lines; determine a plurality of lane midpoints between the first lane line and the second lane line; and connect the lane midpoints in sequence to obtain a lane centerline of the lane.

In some embodiments, the identification unit is further configured to: determine a position distribution relationship between each lane centerline and the road junction area; determine a route direction of the lane centerline based on the position distribution relationship; and identify the inbound lane and the outbound lane based on the route directions of the lane centerlines.

In some embodiments, the virtual lane construction apparatus further includes a classification unit configured to: identify lane distribution relationships between the inbound lane and the outbound lanes; and classify the outbound lanes based on the lane distribution relationships into straight-going outbound lanes and turning outbound lanes. The connection unit is further configured to: connect the lane centerline of the inbound lane with a lane centerline of the straight-going outbound lane to obtain a straight-going virtual connection line; and connect the lane centerline of the inbound lane with a lane centerline of the turning outbound lane to obtain a turning virtual connection line.

In some embodiments, the classification unit is further configured to: determine values of angles of the outbound lanes in relation to the inbound lane based on the lane distribution relationships; and identify a straight-going outbound lane and a turning outbound lane in relation to the inbound lane from the outbound lanes based on the values of the angles.

In some embodiments, the classification unit is further configured to: determine a plane geometric relationship represented by the value of each angle; determine, when the plane geometric relationship is parallelism, that an outbound lane corresponding to the value of the angle and with a same travel direction as the inbound lane is a straight-going outbound lane; and determine, when the plane geometric relationship is perpendicularity, that an outbound lane corresponding to the perpendicularity is a turning outbound lane.

In some embodiments, the construction unit is further configured to: construct a virtual lane centerline in the road junction area for the inbound lane and the outbound lane based on the virtual connection line; and construct a virtual lane corresponding to the virtue lane centerline.

The embodiments of the present disclosure further provide a computer device including a processor and a memory. The memory has a computer program stored thereon, and the processor is configured to execute the computer program stored in the memory to implement steps of the virtual lane construction methods provided in the embodiments of the present disclosure.

The embodiments of the present disclosure further provide a computer-readable storage medium having a plurality of instructions stored thereon. The instructions are suitable for being loaded by a processor to implement steps of any of the virtual lane construction methods provided in the embodiments of the present disclosure.

The embodiments of the present disclosure further provide a computer program product having computer instructions stored in a computer-readable storage medium. A processor of the computer device reads the computer instructions from the computer-readable storage medium, and executes the computer instruction so that the computer device implements steps of any of the virtual lane construction methods provided in the embodiments of the present disclosure.

In the embodiments of the present disclosure, it is possible to acquire information of lane lines within a preset distance of a road junction area, calculate lane centerlines of respective lanes based on the information of lane lines, identify an inbound lane and an outbound lane of the road j unction area based on route directions of respective ones of the lane centerlines in relation to the road junction area, connect a lane centerline of the inbound lane with the lane centerline of the outbound lane to obtain a virtual connection line, and construct a corresponding virtual lane in the road junction area for the inbound lane and the outbound lane based on the virtual connection line. It is thus concluded that according to this solution, lane centerlines of respective lanes around the junction area can be first determined based on information of lane lines acquired, and an inbound lane and an outbound lane can then be determined; the lane centerline of the outbound lane and a lane centerline of the inbound lane are then connected; and finally a corresponding virtual connection lane is constructed in the junction area. In this way, virtual connection lanes connecting inbound lanes and outbounds lanes are accurately constructed in the j unction area without relying on a high-precision map. Safety of autonomous driving of the vehicle is thus ensured and a user's driving experience is improved.

### Brief Description of Drawings

For a clearer illustration of technical solutions in embodiments of the present disclosure, the following gives a brief introduction to drawings to be used in the description of the embodiments. It is apparent that the drawings in the following description merely illustrate some embodiments of the present disclosure. For a person skilled in the art, other drawings may be obtained on the basis of these drawings without paying any creative work.
Fig. 1 is a schematic diagram of a scenario of a virtual lane construction system provided in the embodiments of the present disclosure;
Fig. 2 is a schematic flowchart of a virtual lane construction method provided in the embodiments of the present disclosure;
Fig. 3 is another schematic flowchart of the virtual lane construction method provided in the embodiments of the present disclosure;
Fig. 4 is a schematic diagram showing a structure of a virtual lane construction apparatus provided in the embodiments of the present disclosure; and
Fig. 5 is a schematic diagram showing a structure of a computer device provided in the embodiments of the present disclosure.

### Detailed Description

The technical solutions in the embodiments of the present disclosure will be described clearly and completely below in combination with accompanying drawings in the embodiments of the present disclosure. Obviously, the described embodiments are only some, but not all, of the embodiments of the present disclosure. All other embodiments obtained, based on the embodiments in the present disclosure, by a person skilled in the art without paying any creative effort should fall within the protection scope of the present disclosure.

The embodiments of the present disclosure provide a virtual lane construction method, a virtual lane construction apparatus, a device, and a computer-readable storage medium. The embodiments of the present disclosure will be described from the angle of the virtual lane construction apparatus. The virtual lane construction apparatus may be specifically integrated in a computer device which may be a terminal device. The terminal device may specifically be a terminal device mounted on a transportation means, i.e., a vehicle terminal. The terminal device may also be other types of devices such as a television, a smart phone, a tablet computer, a laptop computer, a desktop computer, a smart speaker, a smart watch, a smart wearable device, etc., and is not limited thereto.

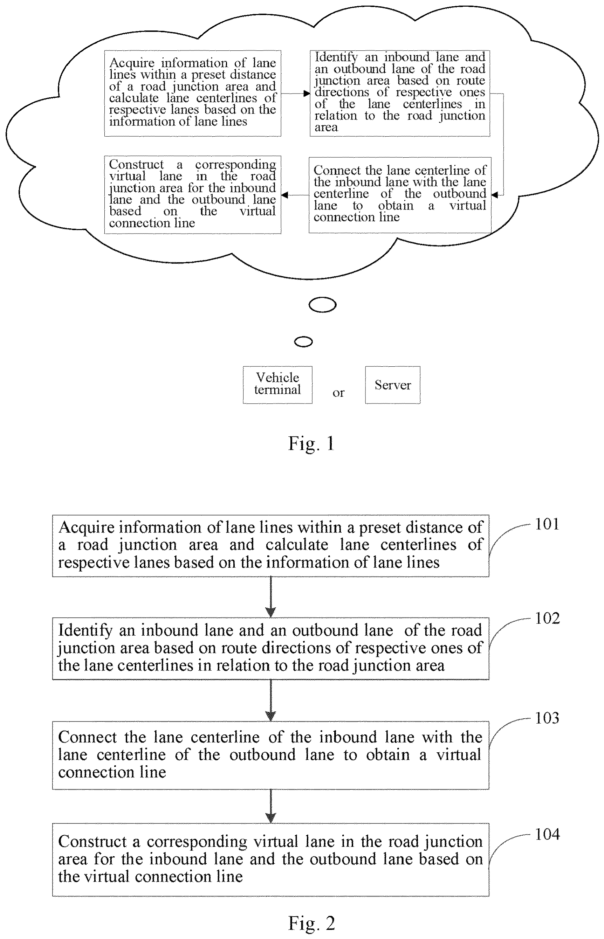

For example, referring to Fig. 1 which is a schematic diagram of a scenario of a virtual lane construction system provided in the embodiments of the present disclosure, the scenario includes a terminal or a server.

Specifically, the terminal may be a vehicle terminal configured to: acquire information of lane lines within a preset distance of a road junction area and calculate lane centerlines of respective lanes based on the information of lane lines; identify an inbound lane and an outbound lane of the road junction area based on route directions of respective ones of the lane centerlines in relation to the road junction area; connect the lane centerline of the inbound lane with the lane centerline of the outbound lane to obtain a virtual connection line; and construct a corresponding virtual lane in the road junction area for the inbound lane and the outbound lane based on the virtual connection line.

Detailed explanations are provided below. It should be noted that the order of describing the following embodiments are not intended as a limitation on preferred orders of the embodiments.

The embodiments will be described with respect to a virtual lane construction apparatus which may be specifically integrated in a computer device such as a terminal device or a server. Refer to Fig. 2 which is a schematic flowchart of the virtual lane construction method provided in the present embodiment. A terminal device is herein taken as an example. The terminal device is a terminal mounted on a vehicle. A processor on the terminal device, when executing a program corresponding to the virtual lane construction method, is caused to perform the virtual lane construction method including the following steps 101 to 104.

In step 101, information of lane lines within a preset distance of a road junction area is acquired, and lane centerlines of respective lanes are calculated based on the information of lane lines.

In an embodiment, in order to make it possible to construct virtual lanes in a road junction area so as to ensure safety of autonomous driving of a vehicle, information of lane lines within a preset distance of the road junction area may be acquired using a sensor on the vehicle, and lane centerlines of respective lanes may be calculated, so that the lane centerlines can be used to represent corresponding lanes. This provides assistance for subsequent virtual lane construction and can help to ensure accuracy of the virtual lane construction.

The information of lane lines may be information of traffic markers that separate different lanes of a traffic road. The information of lane lines includes positional distribution, quantity, types, and directions of the lane lines, and may also include traffic signs on a road surface.

A lane centerline may be a line in the middle of a lane, and each lane centerline represents a corresponding lane.

Specifically, before the vehicle is about to travel to and enter the junction area, information of lane lines and roadsides around the junction area is acquired using the vehicle sensor, and corresponding lanes are determined based on neighborhood relationships between the lane lines, the information including but not limited to information about lane lines of lanes in a forward direction, lane lines of lanes in a backward direction, arrows on the road surface, and lane lines of the lane in which the vehicle is travelling. For example, if there are a total of three lane lines in a road for entering the junction area, then the road having the three lane lines can be divided into two lanes based on the fact that two lane lines form one lane. After lanes in roads around the junction area are acquired, lane centerlines of respective ones of the lanes are calculated. It is thus considered that each lane centerline represents one lane, and each lane centerline is in a direction the same as its corresponding lane.

Therefore, in some embodiments, a plurality of lane midpoints may be determined by connecting two lane lines of a lane so as to obtain a lane centerline of the lane. For example, "calculating lane centerlines of respective lanes based on the information of lane lines" in step 101 may include the following sub-steps (101.1) to (101.3).

In sub-step (101.1), a first lane line and a second lane line that form each lane are determined based on the information of lane lines.

In sub-step (101.2), a plurality of lane midpoints between the first lane line and the second lane line is determined.

In sub-step (101.3), the lane midpoints are connected in sequence to obtain a lane centerline of the lane.

The first lane line may be the first one of lane lines on the left side of the lane, and the second lane line may be the first one of lane lines on the right side of the lane. The first lane line and the second lane line together form the lane.

A lane midpoint may be a midpoint of a line segment connecting the first lane line and the second lane line. Each lane may have a plurality of connecting line segments. That is, each lane has a plurality of lane midpoints.

Specifically, before the vehicle is about to travel to and enter the junction area, the information of lane lines and roadsides around the junction area is acquired using the vehicle sensor, and lanes of each road are obtained; then adjacent lane lines indicated in the information of lane lines are connected to obtain a line segment perpendicular to and between the two adjacent lane lines. This line segment may represent a width of the lane. Then the midpoint of the line segment is calculated. For example, if a line segment is 3 meters long, then the midpoint of the distance line segment is at a 1.5-meter position of the line segment. A plurality of distance line segments for a lane are formed in this way, and corresponding midpoints are calculated as above. A lane centerline of the lane is thus formed by connecting the midpoints.

As above, by acquiring information of lane lines within a preset distance of a road junction area, calculating lane centerlines of respective lanes, and representing the lanes by the corresponding lane centerlines, assistance can be provided for subsequent virtual lane construction and accuracy of the virtual lane construction can be ensured.

In step 102, an inbound lane and an outbound lane of the road junction area are identified based on route directions of respective ones of the lane centerlines in relation to the road junction area.

In an embodiment, in order to make it possible to distinguish types of the lanes, an inbound lane(s) and an outbound lane(s) of the road junction area can be identified based on route directions of the lane centerlines in relation to the road junction area, so that a travel direction of each of the lanes can be determined. This allows more accurate construction of virtual lanes in the junction area in a subsequent step.

A route direction may be the intended direction along which the vehicle should drive in the lane, which is related to traffic rules for lanes, that is, each lane specifies a travel direction for vehicles.

An inbound lane may be a lane leading the vehicle into the junction area. The vehicle can enter the road junction area through the inbound lane.

An outbound lane may be a lane leading the vehicle away from the junction area. For example, after entering the road junction area, the vehicle can drive away from the road junction area through the outbound lane.

Specifically, after the lane centerlines of respective lanes are obtained, the lane centerlines are each classified as either a lane centerline of a lane for entering the junction area (referred to as an inbound lane centerline) or a lane centerline of a lane for exiting the junction area (referred to as an outbound lane centerline), based on the travel directions of the lane centerlines and directions of the lane centerlines in relation to the junction area, and thereby the inbound lanes and the outbound lanes of the road junction area are identified.

As an example, a junction area connects two roads, namely road A and road B, a rear section of road A being connected to the junction area, and a front section of road B being connected to the junction area. It is then determined that road A oriented to enter the j unction area, and road B is oriented to exit the junction area. That is, a lane centerline of road A is a lane centerline for entering the junction area, and a lane centerline of road B is a lane centerline for exiting the j unction area; and road A is an inbound lane and road B is an outbound lane.

Thus, in some embodiments, the inbound lanes and the outbound lanes may be identified based on position distribution relationships between the lane centerlines and the road junction area. For example, "identifying an inbound lane and an outbound lane of the road junction area based on route directions of respective ones of the lane centerlines in relation to the road junction area" in step 102 may include the following sub-steps (102.1) to (102.3).

In sub-step (102.1), the position distribution relationship between each lane centerline and the road junction area is determined.

In sub-step (102.2), the route direction of the lane centerline is determined based on the position distribution relationship.

In sub-step (102.3), the inbound lanes and the outbound lanes are identified based on the route directions of the lane centerlines.

The position distribution relationship may refer to the relative position of an inbound lane or an outbound lane in relation to the road junction area.

Specifically, after the lane centerline of each of the lanes is obtained, it is determined, based on a position of each of the lane centerlines in relation to the road junction area, whether the travel direction corresponding to the lane centerline is a direction of entering the road junction area or a direction of exiting the road junction area. A lane centerline with a travel direction being the direction of entering the road junction area is classified as a lane centerline for entering the junction area i.e., an inbound lane centerline. A lane centerline with a travel direction being the direction of exiting the road junction area is classified as a lane centerline for exiting the junction area, i.e., an outbound lane centerline. The lane corresponding to the inbound lane centerline is then identified as an inbound lane and the lane corresponding to the outbound lane centerline is identified as an outbound lane.

As above, by identifying the inbound lanes and the outbound lanes of the road junction area based on the route directions of the lane centerlines in relation to the road junction area, the travel directions of the lanes can be determined. This allows more accurate construction of virtual lanes in the junction area in a subsequent step.

In step 103, the lane centerline of the inbound lane is connected with the lane centerline of the outbound lane to obtain a virtual connection line.

In an embodiment, in order to construct virtual lanes in the road junction area, the lane centerline of the inbound lane may be connected with the lane centerline of the outbound lane to obtain a virtual connection line, so that a virtual lane may be constructed based on the virtual connection line. This allows the vehicle to be able to construct virtual lanes in the road junction area without a high-precision map, ensuring the safety of autonomous driving of the vehicle.

The virtual connection line may be a line segment in the road junction area that connects the inbound lane centerline and the outbound lane centerline.

Specifically, after the types of the lanes are determined, i.e., after the outbound lanes and the inbound lanes are determined, topological relationships between the lane centerlines of the outbound lanes and the lane centerlines of the inbound lanes are adjusted. Specifically, the lane centerline of an inbound lane may be connected, in the junction area, with the lane centerline of an outbound lane to obtain a virtual connection line, in a way such that a front endpoint of the virtual connection line is connected with a rear endpoint of the lane centerline of the inbound lane and a rear endpoint of the virtual connection line is connected with a front endpoint of the lane centerline of the outbound lane. This makes it possible to determine virtual lane centerlines of virtual lanes in a subsequent step. It should be noted that when there are lane centerlines corresponding to a plurality of inbound lanes at an entrance of the road junction area, a corresponding number of virtual connection lines may be created in the road junction area, and in this case, there may be a plurality of virtual connection lines connected to the lane centerline of any lane for exiting the junction area.

As an example, a junction area connects two roads, namely road A and road B. Road A is an inbound lane and road B is an outbound lane. A line segment C is determined in the road j unction area to connect road A and road B, so that A, B, and C are in a straight line.

In some embodiments, the virtual connection lines include a straight-going virtual connection line and a turning virtual connection line, in which case the virtual lane construction method may also include classifying a plurality of outbound lanes based on lane distribution relationships into straight-going outbound lanes and turning outbound lanes. For example, before "connecting a lane centerline of the inbound lane with lane centerline of the outbound lane to obtain a virtual connection line" in step 103, the method may also include the following steps (103.a. 1) and (103.a.2).

In step (103.a. 1), a lane distribution relationship between the inbound lane and the outbound lane is identified.

In step (103.a.2), the outbound lanes are classified based on the lane distribution relationships into straight-going outbound lanes and turning outbound lanes.

In this case, step 103 "connecting a lane centerline of the inbound lane with a lane centerline of the outbound lane to obtain a virtual connection line" may include the following sub-steps (103.1) and (103.2).

In sub-step (103.1), a lane centerline of the inbound lane is connected with a lane centerline of the straight-going outbound lane to obtain a straight-going virtual connection line.

In sub-step (103.2), the lane centerline of the inbound lane is connected with a lane centerline of the turning outbound lane to obtain a turning virtual connection line.

The lane distribution relationships may be distribution of the inbound lane and the outbound lanes relative to the road junction area, with the road junction area serving as a center. The lane distribution relationships reflect positional relationships between the lanes.

A straight-going outbound lane may be a lane for straight travel that enables the vehicle travelling in an inbound lane to proceed straight through the junction area and exit it.

A turning outbound lane may be a lane for turning that allows the vehicle travelling in an inbound lane to make turns within the junction area and to exit it. Turning outbound lanes may include a left-turn outbound lane and a right-turn outbound lane.

A straight-going virtual connection line may be a virtual line segment in the road junction area that connects the centerline of an inbound lane and the centerline of a straight-going outbound.

A turning virtual connection line may be a virtual line segment in the road j unction area that connects the centerline of an inbound lane and the centerline of a turning outbound lane.

Specifically, after the inbound lane and the outbound lanes of the road junction area are identified based on the route directions of respective ones of the lane centerlines in relation to the road junction area, a top view is created using the road j unction area as a plane center, and distribution of the inbound lane and the outbound lanes in the top view is identified. The distribution includes angles of inbound lanes to outbound lanes, the number of inbound lanes and the number of outbound lanes, connection with the road junction area, etc. With an inbound lane in a specific direction being used as a reference, it is then determined whether an outbound lane is a straight-going outbound lane or a turning outbound lane for the inbound lane. For example, a vehicle is travelling in inbound lane No. 1, and a total of two outbound lanes, namely left-turn outbound lane No. 2 and straight-going outbound lane No. 3, are connected at a junction area ahead. Thus, for inbound lane No. 1, outbound lane No. 2 is a turning outbound lane and outbound lane No. 3 is a straight-going outbound lane. After the types of the outbound lanes are determined, the lane centerline of the inbound lane is connected with a lane centerline of the straight-going outbound lane to obtain a straight-going virtual connection line in the road junction area, and the lane centerline of the inbound lane is connected with a lane centerline of the turning outbound lane to obtain a turning virtual connection line in the road junction area.

Therefore, in some embodiments, a straight-going outbound lane and a turning outbound lane in relation to the inbound lane may be identified from a plurality of outbound lanes based on values of angles of the outbound lanes in relation to the inbound lane. For example, "classifying a plurality of outbound lanes based on lane distribution relationships into straight-going outbound lanes and turning outbound lanes" in step (103.a.2) may include the following sub-steps (103.a.2.1) and (103.a.2.2).

In sub-step (103.a.2.1), values of angles of the outbound lanes in relation to the inbound lane are determined based on the lane distribution relationships.

In sub-step (103.a.2.2), a straight-going outbound lane and a turning outbound lane in relation to the inbound lane may be identified from the outbound lanes based on the values of the angles.

Specifically, after a top view is created using the road junction area as a plane center, and distribution of the inbound lane and the outbound lanes in the top view are identified, values of angles of the outbound lanes in relation to the inbound lane may be determined. Whether the direction of an outbound lane is consistent with a direction of the inbound lane is determined based on the angle of the outbound lane in relation to the inbound lane. If the value of the angle of the outbound lane is not 0° or 180°, it indicates that the direction of the outbound lane is consistent with that of the inbound lane. In this way, a straight-going outbound lane with a travel direction the same as that of the inbound lane is identified from the plurality of outbound lanes, and a turning outbound lane with a travel direction different from that of the inbound lane is identified from the plurality of outbound lanes.

Thus, in some embodiments, a straight-going outbound lane and a turning outbound lane may be determined based on plane geometric relationships represented by the values of the angles. For example, "identifying a straight-going outbound lane and a turning outbound lane in relation to the inbound lane from the outbound lanes based on the values of the angles" in step (103.a.2.2) may include the following sub-steps (103.a.2.2.1), (103.a.2.2.2), and (103.a.2.2.3).

In sub-step (103.a.2.2.1), a plane geometric relationship represented by the value of each angle is determined.

In sub-step (103.a.2.2.2), when the plane geometric relationship is parallelism, it is determined that an outbound lane corresponding to the value of the angle and with a same travel direction as the inbound lane is a straight-going outbound lane.

In sub-step (103.a.2.2.3), when the plane geometric relationship is perpendicularity, it is determined that an outbound lane corresponding to the perpendicularity is a turning outbound lane.

The plane geometric relationship may be a geometric relationship between the lane centerline of an inbound lane and the centerline of an outbound lane in the plane. For example, when an angle between an inbound lane centerline and an outbound lane centerline is 0°, the plane geometric relationship between the two lanes is parallelism.

Specifically, after the inbound lanes and the outbound lanes are determined, it is also necessary to determine whether an outbound lane is a straight-going outbound lane or a turning outbound lane in relation to an inbound lane. To this end, a plane geometric relationship between the outbound lane and the inbound lane may be determined based on a value of an angle of the outbound lane in relation to the inbound lane. When the angle of the outbound lane in relation to the inbound lane is 0°, the two lanes are parallel to each other. Then it is determined whether a travel direction of the outbound lane and a travel direction of the inbound lane are the same. If the direction of a portion of a line segment on an end of the outbound lane centerline close to the junction area is the same as the direction of a portion of a line segment on an end of the inbound lane centerline close to the junction area, it can be determined that the travel direction of the outbound lane and the travel direction of the inbound lane are the same. At this point, it may be determined that the outbound lane parallel to and with the same direction as the inbound lane is a straight-going outbound lane. Furthermore, when the angle of the outbound lane in relation to the inbound lane is 90°, the two lanes are perpendicular to each other. At this point, the travel direction of the outbound lane and the travel direction of the inbound lane are not the same, and it can be determined that the outbound lane perpendicular to the inbound lane is a turning outbound lane. It should be noted that, there may be a plurality of inbound lanes at the entrance of the road junction area, and there may be a plurality of outbound lanes at the exit of the road junction area. Lanes sharing an entrance on a side of the junction area and lanes sharing an exit on another side of the junction area may be designated as an inbound lane bundle at the entrance and an outbound lane bundle at the outbound, respectively. For example, junction area A has two sides, namely side a and side b. Side a serves as an entrance and side b serves as an exit. If a total of four inbound lanes are connected with side a of the junction area A, then these four inbound lanes can be designated as an inbound lane bundle. Likewise, if a total of three outbound lanes are connected with side b of the junction area A, then the three outbound lanes can be designated as an outbound lane bundle. If one of the outbound lanes in the outbound lane bundle is a straight-going outbound lane for any of the inbound lanes in the inbound lane bundle, then any of the outbound lanes in the outbound lane bundle is a straight-going outbound lane for any inbound lane in the inbound lane bundle that allows travelling straight through the road junction area. Likewise, if one of the outbound lanes in the outbound lane bundle is a turning outbound lane for any of the inbound lanes in the inbound lane bundle, then any of the outbound lanes in the outbound lane bundle is a turning outbound lane for any inbound lane in the inbound lane bundle that allows turning while traversing the road junction area.

As above, by connecting the lane centerline of the inbound lane with the lane centerline of the outbound lane to obtain a virtual connection line so that a virtual lane can be constructed based on the virtual connection line, the vehicle is enabled to be able to construct virtual lanes in the road junction area without the help of a high-precision map, which ensures the safety of autonomous driving of the vehicle.

In step 104, a virtual lane is constructed in the road junction area for the inbound lane and the outbound lane based on the virtual connection line.

In an embodiment, in order to allow safe passing of the vehicle through the road junction area, corresponding virtual lanes can be constructed in the road junction area for the inbound lanes and the outbound lanes based on the virtual connection lines. This ensures smooth connection between the inbound lanes and the outbound lanes in the road junction area, and improves the traveling safety of the vehicle.

The virtual lane may be a virtual lane the vehicle follows while navigating through the road junction area. An autonomous vehicle can travel along the virtual lane during its journey within the road junction area.

Specifically, after a virtual connection line between the lane centerline of the outbound lane and the lane centerline of the inbound lane are constructed, widths of the inbound lane and the outbound lane are acquired and a virtual lane is constructed in the junction area using the virtual connection line as the lane centerline, so that the vehicle can safely go through the road junction area via the virtual lane.

Therefore, in some embodiments, corresponding virtual lane centerlines may be constructed based on the virtual connection lines, so that virtual lanes corresponding to the virtual lane centerlines may be constructed. For example, "constructing a corresponding virtual lane in the road junction area for the inbound lane and the outbound lane based on the virtual connection line" in step 104 may include the following sub-steps (104.1) and (104.2).

In sub-step (104.1), a virtual lane centerline is constructed for the inbound lane and the outbound lane in the road junction area based on the virtual connection line.

In sub-step (104.2), a virtual lane corresponding to the virtue lane centerline is constructed.

A virtual lane centerline may be a lane centerline virtually connecting an inbound lane with an outbound lane. It should be noted that a virtual lane centerline is mainly virtually constructed for a road junction area lacking lane lines.

A virtual lane may be a virtual lane for a vehicle when it travels in the road junction area. Virtual lanes may be used in instructing a vehicle to determine a lane in a junction area during autonomous driving or electronic navigation guided pilot, which is conducive to planning of a traveling route of the vehicle and can thus improve driving safety.

Specifically, after the virtual connection line between the lane centerline of the outbound lane and the lane centerline of the inbound lane is constructed, the topological relationship between the lane centerline of the outbound lane and the lane centerline of the inbound lane is adjusted. The virtual lane centerline is constructed in the road junction area based on the virtual connection line, with a front end of the virtual lane centerline being connected to a rear end of the centerline of the inbound lane and a rear end of the virtual lane centerline being connected to a front end of the centerline of the outbound lane, based on which a virtual lane is then constructed in the junction area, so that a successor to the inbound lane is the virtual lane, and a successor to the virtual lane is the outbound lane. It should be noted that when there is a plurality of inbound lanes at the entrance of the road junction area, a corresponding number of virtual lanes may be constructed in the junction area, in which case, a plurality of virtual lanes may be connected to any outbound lane.

As above, corresponding virtual lanes may be constructed in the road junction area for the inbound lanes and the outbound lanes based on the virtual connection lines. This ensures smooth connection between the inbound lanes and the outbound lanes in the road junction area, and improves the traveling safety of the vehicle.

Application scenarios of the virtual lane construction may be realized by implementing any of the embodiments or any combination of the embodiments of the present disclosure.

As can be seen from the above, in the embodiments, it is possible to acquire information of lane lines within a preset distance of a road junction area, calculate lane centerlines of respective lanes based on the information of lane lines, identify an inbound lane and an outbound lane of the road junction area based on route directions of respective ones of the lane centerlines in relation to the road junction area, connect a lane centerline of the inbound lane with a lane centerline of the outbound lane to obtain a virtual connection line, and construct a corresponding virtual lane in the road junction area for the inbound lane and the outbound lane based on the virtual connection line. It is thus concluded that according to this solution, lane centerlines of respective lanes around the junction area can be first determined based on information of lane lines acquired, and an inbound lane and an outbound lane can then be determined; the lane centerline of the outbound lane and a lane centerline of the inbound lane are then connected; and finally a corresponding virtual connection lane is constructed in the junction area. In this way, virtual connection lanes connecting the inbound lanes and the outbound lanes are accurately constructed in the junction area without relying on a high-precision map. Safety of autonomous driving of the vehicle is thus ensured and a user's driving experience is improved.

The method described according to the above embodiment will be elaborated further below by way of examples.

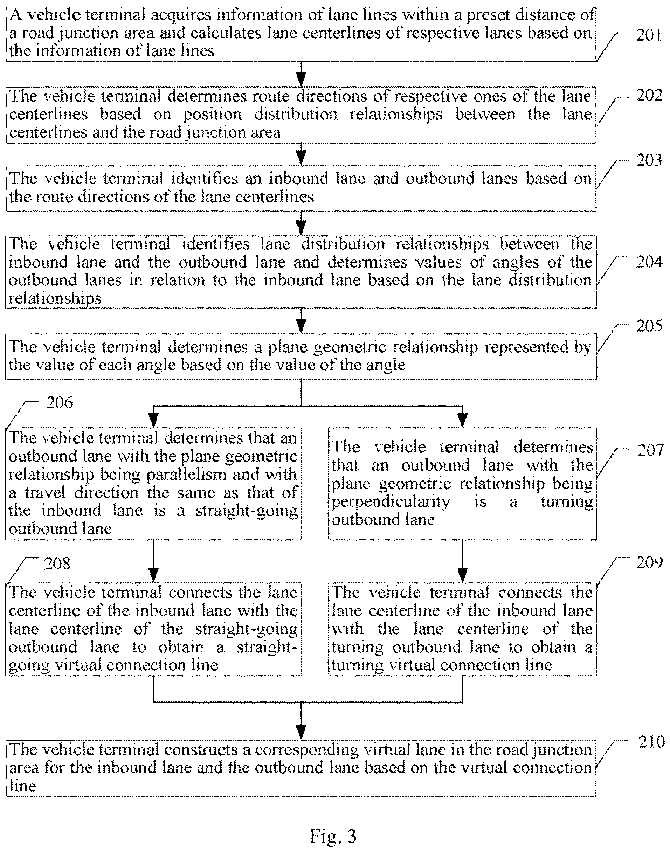

The virtual lane construction method provided in the embodiments of the present disclosure is further described with respect to a virtual lane construction apparatus. Fig. 3 is a schematic flowchart of the virtual lane construction method provided in the embodiments of the present disclosure. For ease of understanding, the embodiments are described in conjunction with Fig. 3.

The embodiments will be described a virtual lane construction apparatus which may be specifically integrated in a computer device such as a vehicle terminal. A processor on the vehicle terminal, when executing program instructions corresponding to the virtual lane construction method, is caused to perform the virtual lane construction method including the following steps 201 to 210.

In step 201, the vehicle terminal acquires information of lane lines within a preset distance of a road junction area, and calculates lane centerlines of respective lanes based on the information of lane lines.

The information of lane lines may be information of traffic markers that separate different lanes of a traffic road. The information of lane lines includes positional distribution, quantity, types, and directions of the lane lines, and may also include traffic signs on a road surface.

A lane centerline may be a line in the middle of a lane, and each centerline represents a corresponding lane.

Specifically, when the vehicle is about to travel to and enter the junction area, the vehicle terminal acquires information of lane lines and roadsides around the junction area through a vehicle sensor, the information including but not limited to information of lane lines of lanes in a forward direction, lane lines of lanes in a backward direction, arrows on the road surface, and lane lines of the lane on which the vehicle is travelling. The vehicle terminal then determines corresponding lanes based on neighborhood relationships between the lane lines. For example, provided that there are a total of three lane lines in a road for entering the junction area, then the road having the three lane lines can be divided into two lanes based on the fact that two lane lines form one lane. After lanes in roads around the junction area are acquired, lane centerlines of respective ones of the lanes are calculated. It is thus considered that each lane centerline represents one lane, and each lane centerline is in a direction the same as its corresponding lane.

In step 202, the vehicle terminal determines the route direction of each lane centerline based on a position distribution relationship between the lane centerline and the road junction area.

The position distribution relationship may refer to the relative position of an inbound lane and an outbound lane in relation to the road junction area.

The route direction may be the intended direction along which the vehicle should drive in the lane, which is related to traffic rules for lanes, that is, each lane defines a travel direction for vehicles.

Specifically, after obtaining the lane centerline of each lane, the vehicle terminal determines whether the travel direction of the lane centerline is a direction of entering the road junction area or a direction of exiting the road j unction area based on positions of respective ones of the lane centerlines in relation to the road junction area.

In step 203, the vehicle terminal identifies the inbound lane and the outbound lanes based on the route directions of the lane centerlines.

An inbound lane may be a lane leading the vehicle into the junction area. The vehicle can enter the road junction area through the inbound lane.

An outbound lane may be a lane leading the vehicle away from the junction area. For example, after entering the road junction area, the vehicle can drive away from the road junction area through the outbound lane.

Specifically, after the lane centerlines of respective lanes are obtained, the vehicle terminal classifies the lane centerlines each as a lane centerline of a lane for entering the junction area, namely an inbound lane centerline, or a lane centerline of a lane for exiting the junction area, namely an outbound lane centerline, based on the travel direction of each lane centerline and a direction thereof in relation to the junction area. By means of the inbound and outbound lane centerlines, the inbound lanes and the outbound lanes of the road junction area are identified.

As an example, a junction area connects two roads, namely road A and road B. A rear section of road A is connected to the junction area, and a front section of road B is connected to the junction area. It is then determined that road A is oriented to enter the junction area and road B is oriented to exit the junction area. That is, a lane centerline of road A is a lane centerline of a lane for entering the junction area, and a lane centerline of road B is a lane centerline of a lane for exiting the junction area. Road A is an inbound lane and road B is an outbound lane.

In step 204, the vehicle terminal identifies lane distribution relationships between the inbound lane and the outbound lanes, and determines values of angles of the outbound lanes in relation to the inbound lane based on the lane distribution relationships.

The lane distribution relationships may be distribution of the inbound lane and the outbound lanes relative to the road junction area, with the road junction area serving as a center. The lane distribution relationships reflect positional relationships between the lanes.

Specifically, after identifying the inbound lane and the outbound lanes of the road junction area based on the route directions of respective ones of the lane centerlines in relation to the road junction area, the vehicle terminal creates a top view using the road junction area as a plane center, and identifies distribution of the inbound lane and the outbound lanes in the top view, so as to determine values of angles of the outbound lanes in relation to the inbound lane.

In step 205, the vehicle terminal determines a plane geometric relationship represented by the values of each angle based on the value of the angle.

A plane geometric relationship may be a geometric relationship between the lane centerline of an inbound lane and the lane centerline of an inbound lane in the plane. For example, when an angle between the inbound lane centerline and the outbound lane centerline is 0°, the plane geometric relationship between the two lanes is parallelism.

Specifically, after determining the inbound lane and the outbound lanes, the vehicle terminal also needs to determine whether an outbound lane is a straight-going outbound lane or a turning outbound lane in relation to the inbound lane. To this end, the vehicle terminal may determine the plane geometric relationship between the outbound lane and the inbound lane based on the value of the angle of the outbound lane in relation to the inbound lane. When the angle value of the outbound lane in relation to the inbound lane is 0°, it indicates that the two lanes are parallel to each other. When the angle value of the outbound lane in relation to the inbound lane is 90°, it indicates that the two lanes are perpendicular to each other.

In step 206, the vehicle terminal determines that an outbound lane with the plane geometric relationship being parallelism and with a travel direction the same as that of the inbound lane is a straight-going outbound lane.

A straight-going virtual connection line may be a virtual line segment in the road junction area that connects an inbound lane centerline and a straight-going outbound lane centerline.

Specifically, after determining the inbound lane and the outbound lane, the vehicle terminal determines, when the angle of the outbound lane in relation to the outbound lane is 0°, that the two lanes are parallel to each other. Then the vehicle terminal determines whether the travel direction of the outbound lane and the travel direction of the inbound lane are the same. If the direction of a portion of a line segment on an end of the outbound lane centerline close to the junction area is the same as the direction of a portion of a line segment on an end of the inbound lane centerline close to the junction area, it may be determined that the travel direction of the outbound lane and the travel direction of the inbound lane are the same. At which point, the vehicle terminal determines that the outbound lane parallel to and in the same direction as the inbound lane is a straight-going outbound lane. It should be noted that, there may be a plurality of inbound lanes at the entrance of the road junction area, and there may be a plurality of outbound lanes at the outbound of the road junction area. Lanes sharing an entrance on a side of the j unction area and lanes sharing an exit on another side of the j unction area may be designated as an inbound lane bundle at the entrance and an outbound lane bundle at the outbound, respectively. For example, junction area A has two sides, namely side a and side b. Side a serves as an entrance and side b serves as an outbound. If a total of four inbound lanes are connected with side a of the junction area A, then these four inbound lanes can be designated as an inbound lane bundle. Likewise, if a total of three outbound lanes are connected with side b of the junction area A, then the three outbound lanes can be designated as an outbound lane bundle. If one of the outbound lanes in the outbound lane bundle is a straight-going outbound lane for any of the inbound lanes in the inbound lane bundle, then any of the outbound lanes in the outbound lane bundle is a straight-going outbound lane for any inbound lane in the inbound lane bundle that allows travelling straight through the road junction area.

In step 207, the vehicle terminal determines that an outbound lane with the plane geometric relationship being perpendicularity is a turning outbound lane.

A turning outbound lane may be a lane for turning that allows the vehicle travelling an inbound lane to make turns in the junction area and to exit the junction area. Turning outbound lanes may include a left-turn outbound lane and a right-turn outbound lane.

Specifically, after determining the inbound lane and the outbound lanes, the vehicle terminal determines, when an angle of an outbound lane in relation to the inbound lane is 90°, that the two lanes are perpendicular to each other. At this point, the travel direction of the outbound lane and the travel direction of the inbound lane are not the same, and it may be determined that the outbound lane perpendicular to the inbound lane is a turning outbound lane. It should be noted that, there may be a plurality of inbound lanes at the entrance of the road junction area, and there may be a plurality of outbound lanes at the outbound of the road junction area. Lanes sharing an entrance on a side of the junction area and lanes sharing an outbound on another side of the junction area may be designated as an inbound lane bundle at the entrance and an outbound lane bundle at the outbound, respectively. For example, junction area A has two sides, namely side a and side b. Side a serves as an entrance and side b serves as an outbound. If a total of four inbound lanes are connected with side a of the junction area A, then these four inbound lanes can be designated as an inbound lane bundle. Likewise, if a total of three outbound lanes are connected with side b of the junction area A, then the three outbound lanes can be designated as an outbound lane bundle. If one of the outbound lanes in the outbound lane bundle is a turning outbound lane for any of the inbound lanes in the inbound lane bundle, then any of the outbound lanes in the outbound lane bundle is a turning outbound lane for any inbound lane in the inbound lane bundle that allows turning while going through the road junction area.

In step 208, the vehicle terminal connects the lane centerline of the inbound lane with the lane centerline of the straight-going outbound lane to obtain a straight-going virtual connection line.

A straight-going virtual connection line may be a virtual line segment in the road junction area that connects an inbound lane centerline and a straight-going outbound lane centerline.

Specifically, after determining the outbound lane and the inbound lanes, the vehicle terminal adjusts topological relationships between the lane centerlines of the outbound lanes and the lane centerline of the inbound lane. Specifically, the lane centerline of the inbound lane and the lane centerline of the straight-going outbound lane may be connected in the junction area to obtain a straight-going virtual connection line in the road junction area. It should be noted that when there are a plurality of lane centerlines corresponding to a plurality of inbound lanes at the entrance of the road junction area, a corresponding number of straight-going virtual connection lines may be constructed in the road junction area, and at this time, a plurality of straight-going virtual connection lines may be connected to the lane centerline of any straight-going outbound lane.

In step 209, the vehicle terminal connects the lane centerline of the inbound lane with a lane centerline of the turning outbound lane to obtain a turning virtual connection line.

A turning virtual connection line may be a connection segment in the road j unction area that connects the centerline of an inbound lane and the centerline of a turning outbound lane.

Specifically, after determining the outbound lanes and the inbound lane, the vehicle terminal adjusts topological relationships between the lane centerlines of the outbound lanes and the lane centerline of the inbound lane. Specifically, the lane centerline of the inbound lane and the lane centerline of the turning outbound lane may be connected in the j unction area to obtain a turning virtual connection line in the road junction area. It should be noted that when there are a plurality of lane centerlines corresponding to a plurality of inbound lanes at an entrance of the road junction area, a corresponding number of turning virtual connection lines may be constructed in the road junction area, and at this time, a plurality of turning virtual connection lines may be connected to the lane centerline of any turning outbound lane.

In step 210, the vehicle terminal constructs corresponding virtual lanes in the road junction area for the inbound lane and the outbound lanes based on the virtual connection lines.

A virtual lane may be a virtual lane for a vehicle follows while navigating the road junction area. Virtual lanes may be used in instructing a vehicle to determine a lane in a junction area during autonomous driving or electronic navigation guided pilot, which is conducive to planning of a traveling route of the vehicle and can thus improve driving safety.

Specifically, after constructing the virtual connection lines between the lane centerlines of the outbound lanes and the lane centerline of the inbound lane, the vehicle terminal adjusts topological relationships between the lane centerlines of the outbound lanes and the lane centerline of the inbound lane, and constructs virtual lane centerlines in the road junction area based on the virtual connection lines, with a front end of each virtual lane centerline being connected to a rear end of the inbound lane centerline, and a rear end of each virtual lane centerline being connected to a front end of the outbound lane centerline. Virtual lanes are then constructed in the junction area based on the virtual lane centerlines, in a way such that a successor to the inbound lane is the virtual lane and a successor to the virtual lane is an outbound lane. It should be noted that when there is a plurality of inbound lanes at the entrance of the road junction area, a corresponding number of virtual lanes may be constructed in the junction area, in which case, a plurality of virtual lanes may be connected to any outbound lane.

The above examples of application scenarios can achieve the following technical effects. Before a vehicle reaches a road junction area, an inbound lane and an outbound lane are identified based on information of lane lines acquired by a vehicle sensor, and the centerline of the inbound lane and the centerline of the outbound lane are connected in the road junction area to construct a virtual lane centerline, based on which a virtual lane can be accurately constructed. This ensures smooth connection between the inbound lane and the outbound lane in the road junction area, and improves the traveling safety of the vehicle.

It can thus be seen that according to this scheme, lane centerlines of respective lanes around the junction area can be first determined based on information of lane lines acquired, and an inbound lane and an outbound lane can then be determined; the lane centerline of the outbound lane and the lane centerline of the inbound lane are then connected; and finally a corresponding virtual connection lane is constructed in the junction area. In this way, virtual connection lanes connecting the inbound lanes and the outbound lanes are accurately constructed in the junction area without relying on a high-precision map. Safety of autonomous driving of the vehicle is thus ensured and a user's driving experience is improved.

In order to better implement the above method, the embodiments of the present disclosure further provide a virtual lane construction apparatus. The virtual lane construction apparatus may be integrated in a computer device such as a vehicle terminal.

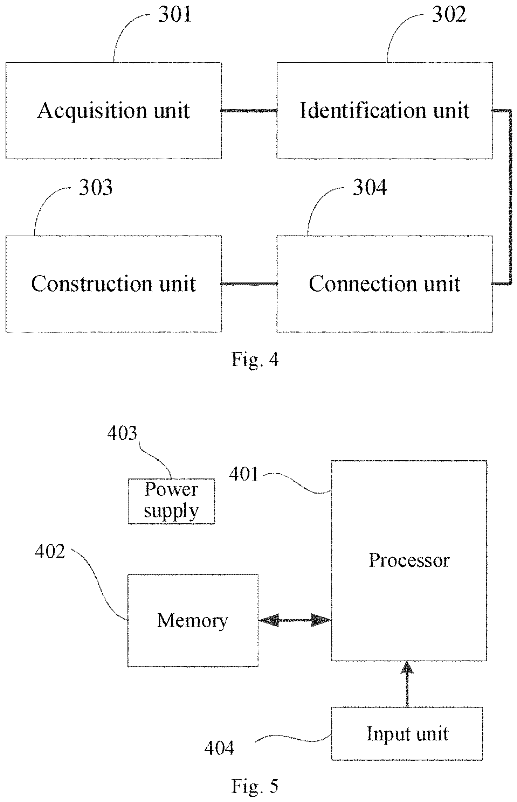

For example, as shown in Fig. 4, the virtual lane construction apparatus may include an acquisition unit 301, an identification unit 302, a connection unit 303, and a construction unit 304.

The acquisition unit 301 is configured to acquire information of lane lines within a preset distance of a road junction area, and calculate lane centerlines of respective lanes based on the information of lane lines.

The identification unit 302 is configured to identify an inbound lane and an outbound lane of the road junction area based on route directions of respective ones of the lane centerlines in relation to the road junction area.

The connection unit 303 is configured to connect a lane centerline of the inbound lane with a lane centerline of the outbound lane to obtain a virtual connection line.

The construction unit 304 is configured to construct a corresponding virtual lane in the road junction area for the inbound lane and the outbound lane based on the virtual connection line.

In some embodiments, the acquisition unit 301 is further configured to: determine a first lane line and a second lane line that form each lane based on the information of lane lines; determine a plurality of lane midpoints between the first lane line and the second lane line; and connect the lane midpoints in sequence to obtain a lane centerline of the lane.

In some embodiments, the identification unit 302 is further configured to: determine a position distribution relationship between each lane centerline and the road junction area; determine a route direction of the lane centerline based on the position distribution relationship; and identify the inbound lane and the outbound lane based on the route directions of the lane centerlines.

In some embodiments, the virtual lane construction apparatus further includes a classification unit configured to: identify lane distribution relationships between the inbound lane and the outbound lanes; and classify the outbound lanes based on the lane distribution relationships into straight-going outbound lanes and turning outbound lanes.

In this case, the connection unit 303 is further configured to: connect the lane centerline of the inbound lane with a lane centerline of the straight-going outbound lane to obtain a straight-going virtual connection line; and connect the lane centerline of the inbound lane with a lane centerline of the turning outbound lane to obtain a turning virtual connection line.

In some embodiments, the classification unit is further configured to: determine values of angles of the outbound lanes in relation to the inbound lane based on the lane distribution relationships; and identify a straight-going outbound lane and a turning outbound lane in relation to the inbound lane from the outbound lanes based on the values of the angles.

In some embodiments, the classification unit is further configured to: determine a plane geometric relationship represented by the value of each angle; determine, when the plane geometric relationship is parallelism, that an outbound lane corresponding to the value of the angle and with a same travel direction as the inbound lane is a straight-going outbound lane; and determine, when the plane geometric relationship is perpendicularity, that an outbound lane corresponding to the perpendicularity is a turning outbound lane.

In some embodiments, the construction unit 304 is further configured to: construct a virtual lane centerline in the road junction area for the inbound lane and the outbound lane based on the virtual connection line; and construct a virtual lane corresponding to the virtue lane centerline.

As can be seen from the above, in the present embodiment, lane centerlines of respective lanes around the junction area can be first determined based on information of lane lines acquired, and an inbound lane and an outbound lane can then be determined; lane centerlines of the outbound lane and a lane centerline of the inbound lane are then connected; and finally a corresponding virtual connection lane is constructed in the junction area. In this way, virtual connection lanes connecting the inbound lanes and the outbound lanes are accurately constructed in the junction area without relying on a high-precision map. Safety of autonomous driving of the vehicle is thus ensured and a user's driving experience is improved.

Specific implementation of each of the above operations may be found in the description of the previous embodiments, and will not be repeated herein.

The embodiments of the present disclosure further provide a computer device. Fig. 5 is a schematic diagram showing a structure of the computer device provided in the embodiments of the present disclosure.

Specifically, the computer device may include components such as a processor 401 having one or more cores, a memory 402 having one or more computer-readable storage media, a power supply 403, and an input unit 404. A person skilled in the art will appreciate that the structure of the computer device shown in Fig. 7 does not constitute a limitation on the computer device, and that the computer device may include more or less components than those shown in the figure, or include a combination of some of the components, or a different arrangement of the components.

The processor 401 is a control center of the computer device. Various parts of the entire computer device are connected via various interfaces and wires. Various functions and data processing of the computer device are performed by running or executing software programs and/or modules stored in the memory 402, and by calling data stored in the memory 402, so that overall monitoring of the computer device can be achieved. Optionally, the processor 401 may include one or more cores. Preferably, the processor 401 may integrate an application processor and a modem processor, the application processor is mainly used to process an operating system, user interfaces, application programs, etc., and the modem processor is mainly used to process wireless communication. It will be appreciated that it is also possible that the foregoing modem processor is not integrated into the processor 401.

The memory 402 may be configured to store software programs and modules, and the processor 401 executes various functional applications and virtual lane construction by executing the software programs and the modules stored in the memory 402. The memory 402 may mainly include a program storage area and a data storage area, among which the program storage area may store an operating system, at least one application for functions (e.g., voice playback function, image playback function, etc.), etc., and the data storage area may store data created based on use of the computer device. In addition, the memory 402 may include a high-speed random access memory and may also include a non-volatile memory, for example, at least one disk storage, a flash memory, or other volatile solid-state storage. The memory 402 may also accordingly include a memory controller to provide access of the processor 401 to the memory 402.

The computer device further includes a power supply 403 that supplies power to each component. Preferably, the power supply 403 may be logically connected with the processor 401 via a power management system, so that functions such as charging and discharging management as well as power consumption management can be realized by means of the power management system. The power supply 403 may also include any component such as one or more DC or AC power sources, a recharging system, a power fault detection circuit, a power converter, an inverter, a power status indicator, etc.

The computer device may also include an input unit 404. The input unit 404 may be configured to receive input number or character information, and generate input signals for a keyboard, a mouse, a joystick, an optical or a trackball that are related to user settings and function control.

The computer device may also include a display unit and the like (although not shown), which will not be described herein. Specifically, in an embodiment, the processor 401 in the computer device loads an executable file corresponding to one or more application programs into the memory 402, and executes the application programs stored in the memory 402, so as to realize various functions including: acquiring information of lane lines within a preset distance of a road junction area, calculate lane centerlines of respective lanes based on the information of lane lines, identifying an inbound lane and outbound lanes of the road junction area based on route directions of respective ones of the lane centerlines in relation to the road junction area, connect a lane centerline of the inbound lane with lane centerlines of the outbound lanes to obtain virtual connection lines, and construct corresponding virtual lanes in the road junction area for the inbound lane and the outbound lanes based on the virtual connection lines.

Specific implementation of each of the above operations may be found in the description of the previous embodiments, and will not be repeated herein.

It can thus be seen from the above that according to this disclosure, lane centerlines of respective lanes around the junction area can be first determined based on information of lane lines acquired, and an inbound lane and an outbound lane can then be determined; the lane centerline of the outbound lane and the lane centerline of the inbound lane are then connected; and finally a corresponding virtual connection lane is constructed in the junction area. In this way, virtual connection lanes connecting the inbound lanes and the outbound lanes are accurately constructed in the junction area without relying on a high-precision map. Safety of autonomous driving of the vehicle is thus ensured and a user's driving experience is improved.

A person skilled in the art will appreciate that all or some of the steps in the methods according to the above embodiments may be implemented by means of instructions or using instructions to control relevant hardware. The instructions may be stored in a computer-readable storage medium and loaded and executed by a processor.

To the above end, the embodiments of the present disclosure provide a computer-readable storage medium having a plurality of instructions stored thereon. The instructions may be loaded by a processor so that steps in any of the virtual lane construction methods provided in the embodiments of the present disclosure are implemented. For example, the instructions may implement the following steps: acquiring information of lane lines within a preset distance of a road junction area, calculating lane centerlines of respective lanes based on the information of lane lines, identifying an inbound lane and an outbound lane of the road junction area based on route directions of respective ones of the lane centerlines in relation to the road junction area, connecting the lane centerline of the inbound lane with the lane centerline of the outbound lane to obtain a virtual connection line, and constructing a corresponding virtual lane in the road junction area for the inbound lane and the outbound lane based on the virtual connection line.

Specific implementation of each of the above operations may be found in the description of the previous embodiments, and will not be repeated herein.

The computer-readable storage medium may include: a read only memory (ROM), a random access memory (RAM), a disk, or an optical disc.

The present disclosure further provides a computer program product or a computer program. The computer program product or the computer program includes computer instructions that are stored in a computer-readable storage medium. A processor of a computer device reads the computer instructions from the computer-readable storage medium and executes the computer instructions, so that the computer device implements the virtual lane construction methods provided in the above optional embodiments.

The instructions stored in the computer-readable storage medium can result in performance of the steps in any of the virtual lane construction methods provided in the embodiments of the present disclosure, and therefore can be used to achieve the beneficial effects that can be achieved by any of the virtual lane construction methods provided in the embodiments of the present disclosure. Details can be found in the description of the previous embodiments and will not be repeated herein.

Embodiments of the virtual lane construction method, the virtual lane construction apparatus, the computer device, and the computer-readable storage medium are described above in detail. Specific examples are used herein to illustrate the principles and embodiments of the present disclosure. The above embodiments are described merely to help understand the methods and the core concept of the present disclosure. For a person skilled in the art, changes may be made to the embodiments and the scope of application of the present disclosure based on the concept of the present disclosure. In summary, the content of the description should not be construed as limiting the present disclosure.

## Claims

1. A virtual lane construction method, comprising:
acquiring information of lane lines within a preset distance of a road junction area, and calculating lane centerlines of respective lanes based on the information of lane lines;
identifying an inbound lane and an outbound lane of the road junction area based on route directions of respective ones of the lane centerlines in relation to the road junction area;
connecting a lane centerline of the inbound lane with a lane centerline of the outbound lane to obtain a virtual connection line; and
constructing a corresponding virtual lane in the road junction area for the inbound lane and the outbound lane based on the virtual connection line.

2. The method according to claim 1, wherein said calculating lane centerlines of respective lanes based on the information of lane lines comprises:
determining, based on the information of lane lines, a first lane line and a second lane line that form each lane;
determining a plurality of lane midpoints between the first lane line and the second lane line; and
connecting the lane midpoints in sequence to obtain a lane centerline of the lane.

3. The method according to claim 1, wherein said identifying an inbound lane and an outbound lane of the road junction area based on route directions of respective ones of the lane centerlines in relation to the road junction area comprises:
determining a position distribution relationship between each lane centerline and the road junction area;
determining a route direction of the lane centerline based on the position distribution relationship; and
identifying the inbound lane and the outbound lane based on the route directions of the lane centerlines.

4. The method according to claim 1, wherein the virtual connection line includes a straight-going virtual connection line and a turning virtual connection line, and before said connecting a lane centerline of the inbound lane with a lane centerline of the outbound lane to obtain a virtual connection line, the method comprises:
identifying lane distribution relationships between the inbound lane and the outbound lanes; and
classifying the outbound lanes based on the lane distribution relationships into straight-going outbound lanes and turning outbound lanes, and
wherein said connecting a lane centerline of the inbound lane with a lane centerline of the outbound lane to obtain a virtual connection line comprises:
connecting the lane centerline of the inbound lane with a lane centerline of a straight-going outbound lane to obtain a straight-going virtual connection line; and/or
connecting the lane centerline of the inbound lane with a lane centerline of a turning outbound lane to obtain a turning virtual connection line.

5. The method according to claim 4, wherein said classifying the outbound lanes based on the lane distribution relationships into straight-going outbound lanes and turning outbound lanes comprises:
determining values of angles of the outbound lanes in relation to the inbound lane based on the lane distribution relationships; and
identifying the straight-going outbound lanes and the turning outbound lanes in relation to the inbound lane from the outbound lanes based on the values of the angles.

6. The method according to claim 5, wherein said identifying the straight-going outbound lanes and the turning outbound lanes in relation to the inbound lane from the outbound lanes based on the values of the angles comprises:
determining a plane geometric relationship represented by the value of each angle;
determining, when the plane geometric relationship is parallelism, that an outbound lane corresponding to the value of the angle and with a same travel direction as the inbound lane is a straight-going outbound lane; and
determining, when the plane geometric relationship is perpendicularity, that an outbound lane corresponding to the perpendicularity is a turning outbound lane.

7. The method according to claim 1, wherein said constructing a corresponding virtual lane in the road junction area for the inbound lane and the outbound lane based on the virtual connection line comprises:
constructing a virtual lane centerline in the road junction area for the inbound lane and the outbound lane based on the virtual connection line; and
constructing a virtual lane corresponding to the virtue lane centerline.

8. A virtual lane construction apparatus, comprising:
an acquisition unit, configured to acquire information of lane lines within a preset distance of a road junction area, and calculate lane centerlines of respective lanes based on the information of lane lines;
an identification unit, configured to identify an inbound lane and an outbound lane of the road junction area based on route directions of respective ones of the lane centerlines in relation to the road junction area;
a connection unit, configured to connect a lane centerline of the inbound lane with a lane centerline of the outbound lane to obtain a virtual connection line; and
a construction unit, configured to construct a corresponding virtual lane in the road junction area for the inbound lane and the outbound lane based on the virtual connection line.

9. A computer device, comprising a processor and a memory, the memory having a computer program stored thereon, and the processor being configured to execute the computer program stored on the memory to implement steps of the virtual lane construction method according to any one of claims 1 to 7.

10. A computer-readable storage medium having stored thereon a plurality of instructions which, when executed by a processor, causes the processor to perform steps of the virtual lane construction method according to any one of claims 1 to 7.
